# EUROPEAN PATENT APPLICATION

(11) **EP 4 687 358 A1**
(43) Date of publication of application: **04.02.2026**
(21) Application number: 24306305.4
(22) Date of filing: 01.08.2024
(51) Int. Cl.: H04W 12/041, H04W 12/0431, H04W 36/00, H04W 36/36

(54) **METHODS, APPARATUSES AND SYSTEMS RELATED TO INTER-CENTRALIZED UNIT LAYER 1/LAYER 2 TRIGGERED MOBILITY**

(71) Applicant: InterDigital Patent Holdings, Inc., Wilmington, DE 19809 (US)
(72) Inventor: KUBOTA, Keiichi, Setagaya-Ku 158-0094 (JP); MARTIN, Brian, Farnham GU9 9AN (GB); WATTS, Dylan, Montreal H4A 3L7 (CA); SALIM, Umer, 06220 Vallauris (FR); FREDA, Martino, Laval H7E5M4 (CA); TEYEB, Oumer, Montreal H3C 0X6 (CA); MARINIER, Paul, Brossard J4X 2J7 (CA)
(74) Representative: Interdigital

(57) **Abstract**

In an embodiment, a method implemented in a WTRU comprises receiving, from a source cell, a first message comprising configuration information of one or more candidate cells, wherein the configuration information indicates a plurality of radio bearers of each candidate cell and of the source cell, wherein each radio bearer of the plurality of radio bearers is associated with an identifier; receiving, from the source cell, a mobility cell switch command message comprising information indicating a mobility cell switch to a candidate cell; performing the mobility cell switch to the candidate cell; and on condition that a first identifier associated with a radio bearer of the source cell differs from a second identifier associated with a corresponding radio bearer of the candidate cell, performing a PDCP re-establishment for the corresponding radio bearer associated with the second identifier to apply an unused derived security key for the radio bearer.

## Description

### FIELD OF THE INVENTION

The present disclosure is generally directed to methods and procedures related to inter-centralized unit Layer 1/Layer 2 triggered mobility. More particularly, the present disclosure relates to methods, apparatuses and systems to perform inter-centralized unit Layer 1/Layer 2 triggered mobility execution with or without packet data convergence protocol anchor change.

### BACKGROUND

In 5G network system, Layer 1/Layer 2 triggered mobility (LTM) operation is supported for mobility between cells of the same gNode-B (gNB) (e.g. same centralized unit). Depending on the deployment of the network this may significantly limit the opportunities to use LTM.

Recent solution that enable inter-centralized unit (inter-CU or inter-gNB) LTM execution has been developed. Proposed solution relates to inter-CU LTM without security key change.

LTM candidate configuration needs to tell whether a wireless transmit/receive unit, WTRU, shall perform a security key change for a specific radio bearer or not so that inter-CU LTM without security key change operation can be supported.

However, existing radio resource control (RRC) signalling doesn't support the distinction between the security key update required radio bearer(s) and the security key update not-required radio bearer(s) and the existing RRC signalling doesn't support the distinction between inter-CU and intra-CU LTM.

There is a need for new LTM candidate configuration.

### SUMMARY

In an embodiment, a method, implemented in a wireless transmit/receive unit (WTRU) may comprise a step of receiving, from a source cell, a first message comprising configuration information of one or more candidate cells, wherein the configuration information indicates a plurality of radio bearers of each candidate cell and of the source cell, wherein each radio bearer of the plurality of radio bearers is associated with an identifier. The method may further comprise a step of receiving, from the source cell, a mobility cell switch command message comprising information indicating a mobility cell switch to a candidate cell. The method may further comprise a step of performing the mobility cell switch to the candidate cell; and a step of performing a packet data convergence protocol (PDCP) re-establishment for the corresponding radio bearer associated with the second identifier to apply an unused derived security key for the radio bearer, on condition that a first identifier associated with a radio bearer of the source cell differs from a second identifier associated with a corresponding radio bearer of the candidate cell,.

The unused derived security key may be a new security key derived during performing the mobility cell switch to the candidate cell. The unused derived security key may be derived during a previously performed mobility procedure and not yet applied to the corresponding radio bearer.

The method may further comprise a step of maintaining a current security key for the radio bearer, on condition that the first identifier associated with a radio bearer of the source cell is identical to the second identifier associated with a corresponding radio bearer of the candidate cell.

In an embodiment, a method, implemented in a wireless transmit/receive unit (WTRU) may comprise a step of receiving, from a source cell, a first message comprising configuration information of one or more candidate cells, wherein each candidate cell of the one or more candidate cells and the source cell is associated with an identifier. The method may further comprise a step of selecting a candidate cell of the one or more candidate cells based on some measurement criteria. The method may further comprise a step of transmitting, to the source cell, a message comprising first information indicating the selected candidate cell. The method may further comprise a step of receiving, from the source cell, a mobility cell switch command message comprising second information indicating a mobility switch to the selected candidate cell; and a step of performing a new security key derivation allocated to the selected candidate cell, on condition that a first identifier of the source cell differs from a second identifier of the candidate cell.

In an embodiment, a method, implemented in a wireless transmit/receive unit (WTRU) may comprise a step of receiving, from a source cell, a mobility cell switch command message comprising first information indicating a mobility switch to a candidate cell, wherein the mobility cell switch command comprises second information comprising an indication for performing a new security key derivation; and a step of performing the new security key derivation based on the mobility cell switch command indications. The mobility cell switch command message may be a medium access control element, (MAC CE). The indication for performing the new security key derivation is a next hop chaining counter (NCC).

In an embodiment, a wireless transmit/receive unit (WTRU) comprising a processor, a transmitter, a receiver and a memory, may be configured to receive, from a source cell, a first message comprising configuration information of one or more candidate cells, wherein the configuration information indicates a plurality of radio bearers of each candidate cell and of the source cell, wherein each radio bearer of the plurality of radio bearers is associated with an identifier. The WTRU may be configured to receive, from the source cell, a mobility cell switch command message comprising information indicating a mobility cell switch to a candidate cell. The WTRU may be configured to perform the mobility cell switch to the candidate cell; and to perform a packet data convergence protocol, PDCP, re-establishment for the corresponding radio bearer associated with the second identifier to apply an unused derived security key for the radio bearer, on condition that a first identifier associated with a radio bearer of the source cell differs from a second identifier associated with a corresponding radio bearer of the candidate cell.

The unused derived security key may be a new security key derived during performing the mobility cell switch to the candidate cell. The unused derived security key may be derived during a previously performed mobility procedure and not yet applied to the corresponding radio bearer.

The WTRU may be configured to maintain a current security key for the radio bearer, on condition that the first identifier associated with a radio bearer of the source cell is identical to the second identifier associated with a corresponding radio bearer of the candidate cell.

In an embodiment, a wireless transmit/receive unit (WTRU) comprising a processor, a transmitter, a receiver and a memory, may be configured to receive, from a source cell, a mobility cell switch command message comprising first information indicating a mobility switch to a candidate cell, wherein the mobility cell switch command comprises second information comprising an indication for performing a new security key derivation; and may be configured to perform the new security key derivation based on the mobility cell switch command indications.

The mobility cell switch command message may be a MAC CE. The indication for performing the new security key derivation may be a next hop chaining counter, NCC.

### BRIEF DESCRIPTION OF THE DRAWINGS

A more detailed understanding may be from the detailed description below, given by way of example in conjunction with drawings appended hereto. Figures in such drawings, like the detailed description, are examples. As such, the Figures (FIGs.) and the detailed description are not to be considered limiting, and other equally effective examples are possible and likely. Furthermore, like reference numerals ("ref.") in the FIGs. indicate like elements, and wherein:
FIG. 1A is a system diagram illustrating an example communications system;
FIG. 1B is a system diagram illustrating an example wireless transmit/receive unit (WTRU) that may be used within the communications system illustrated in FIG. 1A;
FIG. 1C is a system diagram illustrating an example radio access network (RAN) and an example core network (CN) that may be used within the communications system illustrated in FIG. 1A;
FIG. 1D is a system diagram illustrating a further example RAN and a further example CN that may be used within the communications system illustrated in FIG. 1A;
FIG. 2 is a signalling diagram illustrating an example of a LTM procedure according to an embodiment;
FIG. 3 is a block diagram illustrating an example of a handover key chaining according to an embodiment;
FIG. 4 is a block diagram illustrating an example of an inter-gNB LTM according to an embodiment;
FIG. 5 is a block diagram illustrating an example of an intra-CU and inter-CU mobility scenarios;
FIG. 6 is a signalling diagram illustrating an example of inter-CU mobility signalling according to an embodiment;
FIG. 7 is a signalling diagram illustrating an example of a user equipment assistance information (UAI) for a security key update procedure according to an embodiment.
FIG. 8 is a block diagram illustrating an example of a key hierarchy generation in a 5G system according to an embodiment;
FIG. 9 is a flow chart diagram illustrating an example of a method, implemented in a WTRU, for a LTM operation according to an embodiment;
FIG. 10 is a flow chart diagram illustrating an example of a method, implemented in a WTRU, for a LTM operation according to another embodiment; and
FIG. 11 is a flow chart diagram illustrating an example of a method, implemented in a WTRU, for a LTM operation according to another embodiment.

### DETAILED DESCRIPTION

In the following detailed description, numerous specific details are set forth to provide a thorough understanding of embodiments and/or examples disclosed herein. However, it will be understood that such embodiments and examples may be practiced without some or all of the specific details set forth herein. In other instances, well-known methods, procedures, components and circuits have not been described in detail, so as not to obscure the following description. Further, embodiments and examples not specifically described herein may be practiced in lieu of, or in combination with, the embodiments and other examples described, disclosed or otherwise provided explicitly, implicitly and/or inherently (collectively "provided") herein. Although various embodiments are described and/or claimed herein in which an apparatus, system, device, etc. and/or any element thereof carries out an operation, process, algorithm, function, etc. and/or any portion thereof, it is to be understood that any embodiments described and/or claimed herein assume that any apparatus, system, device, etc. and/or any element thereof is configured to carry out any operation, process, algorithm, function, etc. and/or any portion thereof.

Hereinafter, 'a' and 'an' and similar phrases are to be interpreted as `one or more' and 'at least one'. Similarly, any term which ends with the suffix '(s)' is to be interpreted as `one or more' and 'at least one'. The term 'may' is to be interpreted as `may, for example'.

A sign, symbol, or mark of forward slash 'I' is to be interpreted as 'and/or' unless particularly mentioned otherwise, where for example, 'A/B' may imply 'A and/or B'.

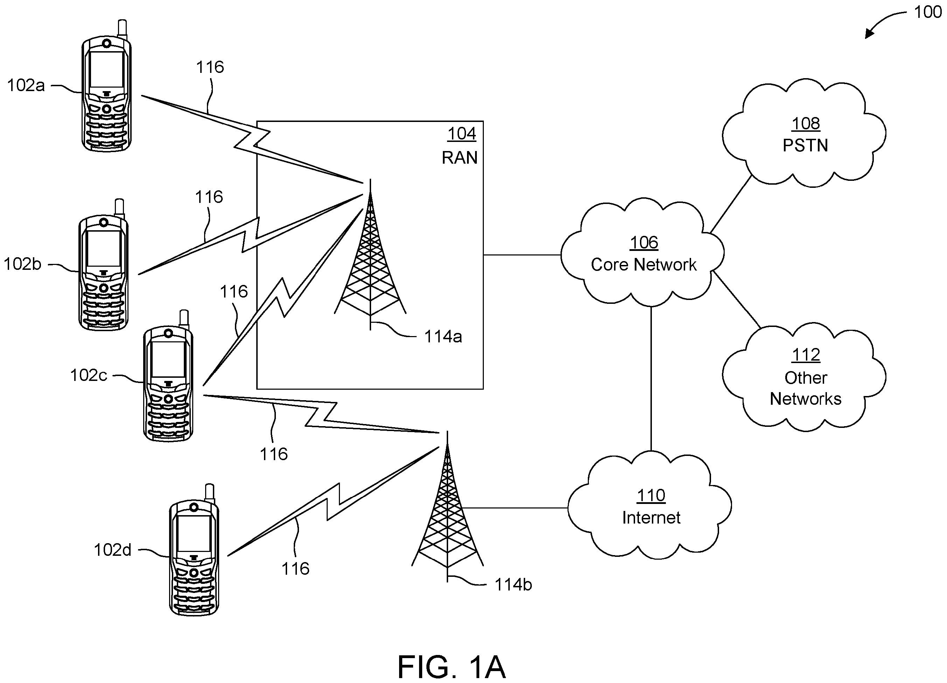

The methods, apparatuses and systems provided herein are well-suited for communications involving both wired and wireless networks. An overview of various types of wireless devices and infrastructure is provided with respect to FIGs. 1A-1D, where various elements of the network may utilize, perform, be arranged in accordance with and/or be adapted and/or configured for the methods, apparatuses and systems provided herein.

FIG. 1A is a system diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail (ZT) unique-word (UW) discreet Fourier transform (DFT) spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104/113, a core network (CN) 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include (or be) a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d, e.g., to facilitate access to one or more communication networks, such as the CN 106/115, the Internet 110, and/or the networks 112. By way of example, the base stations 114a, 114b may be any of a base transceiver station (BTS), a Node-B (NB), an eNode-B (eNB), a Home Node-B (HNB), a Home eNode-B (HeNB), a gNode-B (gNB), a NR Node-B (NR NB), a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in an embodiment, the base station 114a may include three transceivers, i.e., one for each sector of the cell. In an embodiment, the base station 114a may employ multiple-input multiple output (MIMO) technology and may utilize multiple transceivers for each or any sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In an embodiment, the base station 114a and the WTRUs 102a, 102b, 102c may implement radio technologies such as IEEE 802.11 (i.e., Wireless Fidelity (Wi-Fi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node-B, Home eNode-B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In an embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In an embodiment, the base station 114b and the WTRUs 102c, 102d may utilize a cellular-based RAT (e.g., WCDMA, CDMA2000, GSM, LTE, LTE-A, LTE-A Pro, NR, etc.) to establish any of a small cell, picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing an NR radio technology, the CN 106/115 may also be in communication with another RAN (not shown) employing any of a GSM, UMTS, CDMA 2000, WiMAX, E-UTRA, or Wi-Fi radio technology.

The CN 106/115 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/114 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

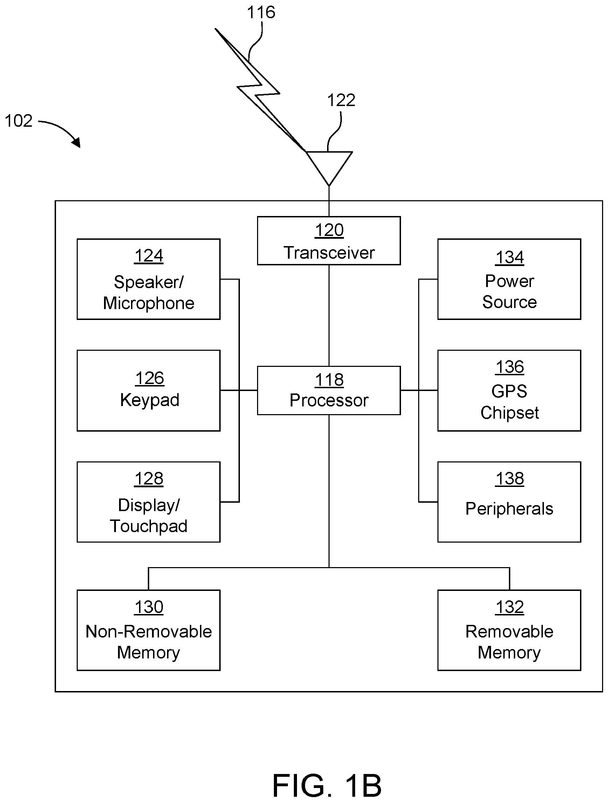

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other elements/peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together, e.g., in an electronic package or chip.

The transmit/receive element 122 may be configured to transmit signals to, or receive signals from, a base station (e.g., the base station 114a) over the air interface 116. For example, in an embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In an embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. For example, the WTRU 102 may employ MIMO technology. Thus, in an embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other elements/peripherals 138, which may include one or more software and/or hardware modules/units that provide additional features, functionality and/or wired or wireless connectivity. For example, the elements/peripherals 138 may include an accelerometer, an e-compass, a satellite transceiver, a digital camera (e.g., for photographs and/or video), an universal serial bus (USB) port, a vibration device, a television transceiver, a hands free headset, a Bluetooth^{®} module, a frequency modulated (FM) radio unit, a digital music player, a media player, a video game player module, an Internet browser, a virtual reality and/or augmented reality (VR/AR) device, an activity tracker, and the like. The elements/peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the uplink (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the uplink (e.g., for transmission) or the downlink (e.g., for reception)).

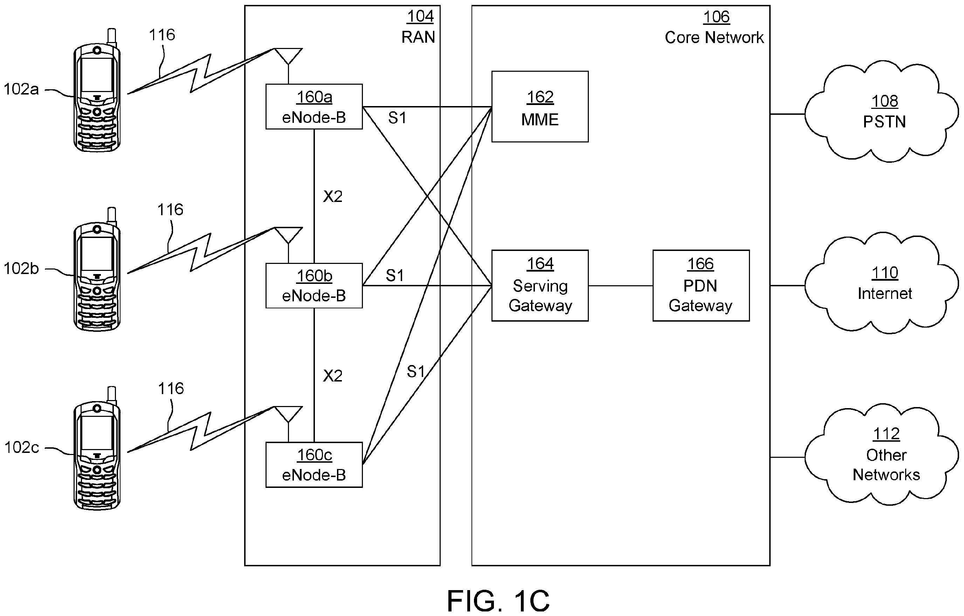

FIG. 1C is a system diagram illustrating the RAN 104 and the CN 106 according to an embodiment. As noted above, the RAN 104 may employ an E-UTRA radio technology to communicate with the WTRUs 102a, 102b, and 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In an embodiment, the eNode-Bs 160a, 160b, 160c may implement MIMO technology. Thus, the eNode-B 160a, for example, may use multiple antennas to transmit wireless signals to, and receive wireless signals from, the WTRU 102a.

Each of the eNode-Bs 160a, 160b, and 160c may be associated with a particular cell (not shown) and may be configured to handle radio resource management decisions, handover decisions, scheduling of users in the uplink (UL) and/or downlink (DL), and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While each of the foregoing elements are depicted as part of the CN 106, it will be appreciated that any one of these elements may be owned and/or operated by an entity other than the CN operator.

The MME 162 may be connected to each of the eNode-Bs 160a, 160b, and 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode-Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode-B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGs. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in infrastructure basic service set (BSS) mode may have an access point (AP) for the BSS and one or more stations (STAs) associated with the AP. The AP may have an access or an interface to a distribution system (DS) or another type of wired/wireless network that carries traffic into and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.1 1z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signalling. The primary channel may be the operating channel of the BSS and may be used by the STAs to establish a connection with the AP. In certain representative embodiments, Carrier sense multiple access with collision avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High throughput (HT) STAs may use a 40 MHz wide channel for communication, for example, via a combination of the primary 20 MHz channel with an adjacent or nonadjacent 20 MHz channel to form a 40 MHz wide channel.

Very high throughput (VHT) STAs may support 20 MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse fast Fourier transform (IFFT) processing, and time domain processing, may be done on each stream separately. The streams may be mapped on to the two 80 MHz channels, and the data may be transmitted by a transmitting STA. At the receiver of the receiving STA, the above-described operation for the 80+80 configuration may be reversed, and the combined data may be sent to a medium access control (MAC) layer, entity, etc.

Sub 1 GHz modes of operation are supported by 802.11af and 802.11 ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV white space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support meter type control/machine-type communications, such as machine-type communications devices in a macro coverage area. Machine-type communications devices may have certain capabilities, for example, limited capabilities including support for (e.g., only support for) certain and/or limited bandwidths. The machine-type communications devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or network allocation vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

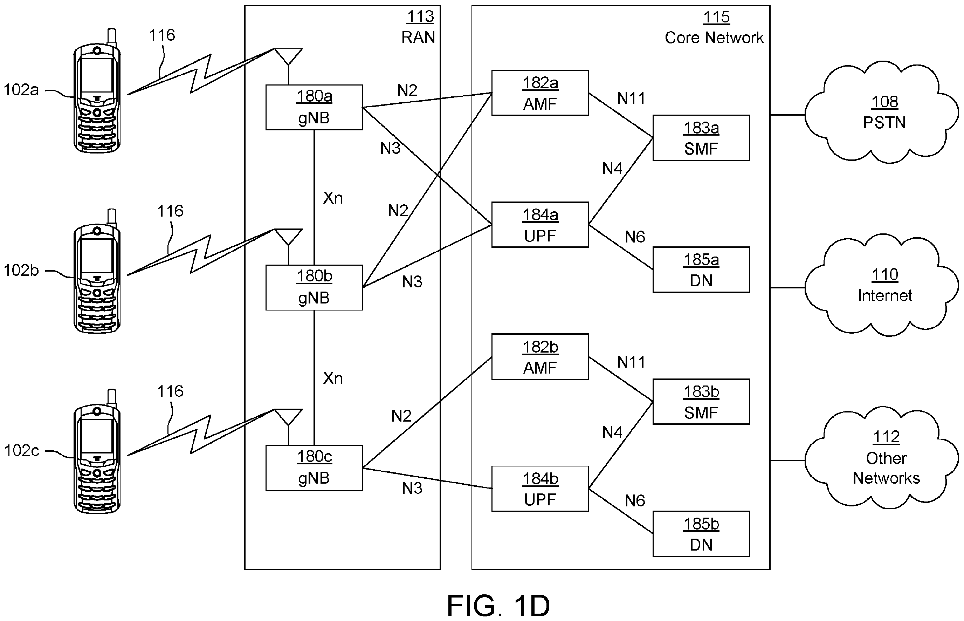

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In an embodiment, the gNBs 180a, 180b, 180c may implement MIMO technology. For example, gNBs 180a, 180b may utilize beamforming to transmit signals to and/or receive signals from the WTRUs 102a, 102b, 102c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., including a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards user plane functions (UPFs) 184a, 184b, routing of control plane information towards access and mobility management functions (AMFs) 182a, 182b, and the like. As shown in FIG. 1D, the gNBs 180a, 180b, 180c may communicate with one another over an Xn interface.

The CN 115 shown in FIG. 1D may include at least one access and mobility management function (AMF) 182a, 182b, at least one UPF 184a, 184b, at least one session management function (SMF) 183a, 183b, and at least one Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of NAS signalling, mobility management, and the like. Network slicing may be used by the AMF 182a, 182b, e.g., to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as Wi-Fi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, e.g., to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In an embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to any of: WTRUs 102a-d, base stations 114a-b, eNode-Bs 160a-c, MME 162, SGW 164, PGW 166, gNBs 180a-c, AMFs 182a-b, UPFs 184a-b, SMFs 183a-b, DNs 185a-b, and/or any other element(s)/device(s) described herein, may be performed by one or more emulation elements/devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device (e.g., a network node) may be directly coupled to another device for purposes of testing and/or may performing testing using over-the-air wireless communications.

The one or more emulation devices may perform the one or more, including all, functions while not being implemented/deployed as part of a network node (e.g., wired and/or wireless communication network). For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

Layer 1/Layer 2 triggered mobility (LTM) was introduced in 3GPP Rel-18 and can offer improvements in handover latency and interruption time compared to Layer 3 based mobility. However, LTM as introduced in Rel-18 also may have a number of limitations compared to Layer 3 mobility.

In Rel-18, LTM operation may be (e.g., only) supported for mobility between cells of the same gNB (same CU). Depending on the deployment of the network this may significantly limit the opportunities to use LTM. By enabling LTM operation between cells of different gNBs (i.e. inter-CU) then the network will be able to gain the benefits of LTM for a far greater number of handovers.

Layer 3 mobility uses layer 3 measurement reporting which may support WTRU evaluated events for triggering of measurement reports and reduces signalling overhead compared to periodic measurement reporting. Such event triggering may be not supported by the L1 measurements that are used for LTM mobility.

L1 measurements for LTM procedures may be limited to synchronization signal block (SSB) measurements. Expanding L1 measurements to include channel state information reference signal (CSI-RS) can address this limitation and can be expected to enable greater throughput on the target cell immediately after cell switch.

Layer 3 mobility has evolved over several releases. Conditional handover (CHO) and other conditional mobility procedures (e.g., CPAC, SCPAC) may have been developed to achieve high robustness by enabling the procedure to be executed without necessitating a signalling exchange with source cell beforehand. LTM, as introduced in Rel-18, may offer short interruption time but not with the same level of robustness as the conditional L3 mobility procedures.

Enhancements should be specified so that the system can benefit from both the high robustness and short interruption. Enhancement should be specified as, for example, as follow.

(i) Specify support for inter-CU LTM: (a) prioritize the case when a CU is acting as a master node (MN) when dual connectivity (DC) is not configured; (b) as secondary priority, support the case when new radio dual connectivity (NR-DC) is configured and the CU is acting as a secondary node (SN) and master cell group (MCG) is unchanged; (c) as secondary priority, support the case when NR-DC is configured, CU is acting as a MN and a secondary cell group (SCG) is unchanged or SCG is released (Note: The case that LTM is configured in both MCG and SCG is excluded); (d) specify support for subsequent LTM mobility procedures aiming to avoid RRC configuration between cell switches; coordination with SA3 needed with respect to security key handling; (e) 3GPP Rel. 18 intra-CU LTM procedure is considered as baseline for adding inter-CU support.

(ii) Measurements related enhancements for purpose of supporting LTM: (a) measurement related enhancements may be applicable to Intra-CU MCG/SCG LTM and Inter-CU MCG/SCG LTM; (b) specify necessary components to support event triggered L1 measurement reporting; (c) specify support for CSI-RS measurements for LTM procedures and enable CSI-RS based beam management, and/or other necessary physical layer operations on candidate cells before LTM.

(iii) Specify support of conditional LTM: (a) specify WTRU evaluated conditions for triggering LTM; (b) aim to support conditional LTM including subsequent LTM; (c) prioritize intra-CU LTM.

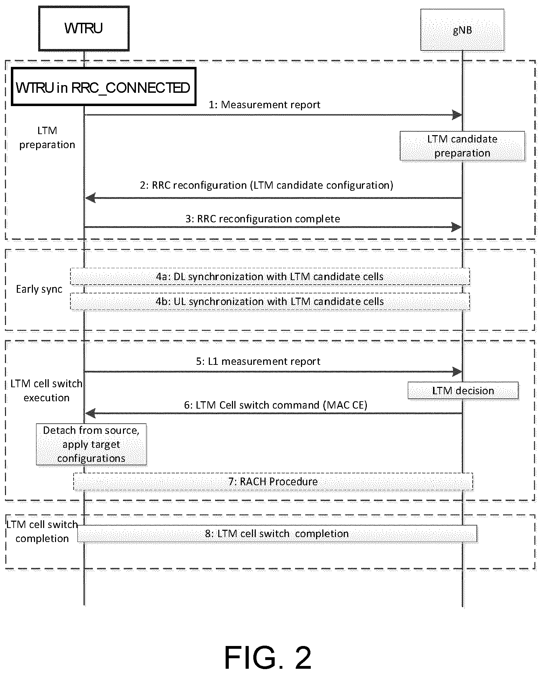

Fig. 2 is illustrating an example of a signalling procedure for LTM.

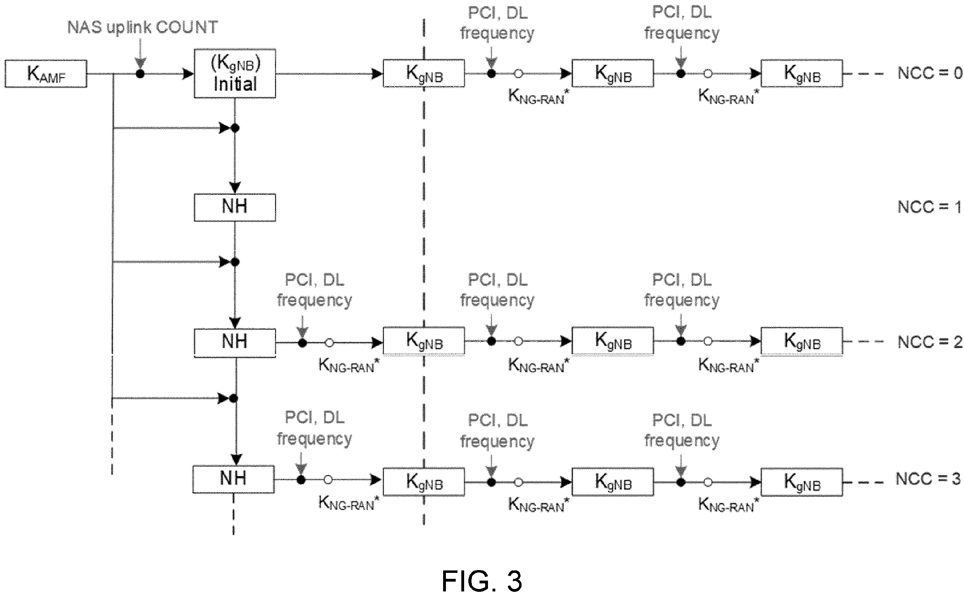

Referring to FIG. 3, a model for a handover key chaining is illustrated.

Whenever an initial access stratum (AS) security context may need to be established between a WTRU and gNB/ng-eNB, a AMF and the WTRU shall derive a K_{gNB} and a next hop parameter (NH). The K_{gNB} and the NH may be derived from the K_{AMF}. A NH chaining counter (NCC) may be associated with each K_{gNB} and NH parameter. Every K_{gNB} may be associated with the NCC corresponding to the NH value from which it was derived. At initial setup, the K_{gNB} may be derived directly from K_{AMF}, and is then considered to be associated with a virtual NH parameter with NCC value equal to zero. At initial setup, the derived NH value may be associated with the NCC value one. At the WTRU, the NH derivation associated with NCC=1 could be delayed until the first handover performing vertical key derivation. In N2 handover, when the K_{gNB} is updated either due to K_{AMF} change or synchronising the AS security context with the NAS security context, the K_{gNB} may be derived. In inter-RAT handover, the K_{gNB} may derived. In WTRU context modification, the K_{gNB} may be derived.

The AMF shall not send the NH value to gNB/ng-eNB at the initial connection setup. The gNB/ng-eNB shall initialize the NCC value to zero after receiving NGAP initial context setup request message. Since the AMF may not send the NH value to gNB/ng-eNB at the initial connection setup, the NH value associated with the NCC value one may not be used in the next Xn handover or the next intra-gNB/intra-ng-eNB-CU handover, for the next Xn handover or the next intra-gNB-CU/intra-ng-eNB handover, the horizontal key derivation will apply (see Fig. 3, wherein key derivation takes place with the horizontal (left to right) direction). One of the rules specified for the AMF states that the AMF may (e.g., always) compute a fresh {NH, NCC} pair that is given to the target gNB/ng-eNB. An implication of this may be that the first {NH, NCC} pair will never be used to derive a K_{gNB}. It may (e.g., only) serve as an initial value for the NH chain.

The WTRU and the gNB/ng-eNB may use the K_{gNB} to secure the communication between each other. On handovers and at transitions from RRC_INACTIVE to RRC_CONNPCTPD states, the basis for the K_{gNB} that will be used between the WTRU and the target gNB/ng-eNB, called K_{NG-RAN}*, may be derived from either the currently active K_{gNB} or from the NH parameter. If K_{NG-RAN}* is derived from the currently active K_{gNB} this is referred to as a horizontal key derivation (see Fig. 3) and if the K_{NG-RAN}* is derived from the NH parameter, the derivation may be referred to as a vertical key derivation.

As NH parameters may be (e.g., only) computable by the WTRU and the AMF, it is arranged so that NH parameters may be provided to gNB/ng-eNBs from the AMF in such a way that forward security can be achieved.

On handovers with vertical key derivation, the NH may be further bound to a target physical cell identity (PCI) and its absolute radio frequency channel number downlink (ARFCN-DL) before it is taken into use as the K_{gNB} in the target gNB/ng-eNB. On handovers with horizontal key derivation, the currently active K_{gNB} may be further bound to the target PCI and its frequency ARFCN-DL before it is taken into use as the K_{gNB} in the target gNB/ng-eNB.

About user plane (UP) security policy, the SMF shall provide UP security policy for a PDU session to the ng-eNB/gNB during the PDU session establishment procedure.

The UP security policy may indicate whether UP confidentiality and/or UP integrity protection shall be activated or not for all DRBs belonging to that PDU session. The UP security policy may be used to activate UP confidentiality and/or UP integrity for all DRBs belonging to the PDU session.

The WTRU may activate UP confidentiality and/or UP integrity protection per each data radio bearer (DRB), according to the received UP security policy, using RRC signalling. If the user plane security policy indicates "Required" or "Not needed", the ng-eNB/gNB may not overrule the UP security policy provided by the SMF. If the ng-eNB/gNB cannot activate UP confidentiality and/or UP integrity protection when the received UP security policy is "Required", the ng-eNB/gNB may reject establishment of UP resources for the PDU session and may indicate reject-cause to the SMF. If the received UP security policy is "Not needed ", then the establishment of the PDU session may proceed as described in TS 23.502. If (e.g., only if) the WTRU indicates that it supports use of integrity protection with ng-eNB, the ng-eNB may activate UP integrity protection. Local SMF may override the confidentiality option in the UP security policy received from the home SMF based on its local policy, roaming agreement and/or regulatory requirements.

At an Xn-handover from the source ng-eNB/gNB to the target ng-eNB/gNB, the source ng-eNB/gNB may include in a HANDOVER REQUEST message, the WTRU's UP security policy. If the UP security policy is 'Required', the target ng-eNB/gNB may reject all PDU sessions for which it cannot comply with the corresponding received UP security policy and may indicate the reject-cause to the source ng-eNB/gNB. For the accepted PDU sessions, the target ng-eNB/gNB may activate UP confidentiality and/or UP integrity protection per DRB according to the received WTRU's UP security policy and may indicate that to the WTRU in the HANDOVER COMMAND by the source ng-eNB/gNB. If (e.g., only if) the WTRU indicates that it supports use of integrity protection with ng-eNB/gNB, the target ng-eNB/gNB may activate UP integrity protection.

If the WTRU receives an indication in the HANDOVER COMMAND that UP integrity protection and/or UP encryption for a PDU session is enabled at the target ng-eNB/gNB, the WTRU may generate or update the UP encryption key and/or UP integrity protection key and shall activate UP encryption and/or UP integrity protection for the respective PDU session. If the security policy is 'Preferred', it may be possible to have a change in activation or deactivation of UP integrity after the handover.

Further, in a Path-Switch message, the target ng-eNB/gNB may send the WTRU's UP security policy and corresponding PDU session ID received from the source ng-eNB/gNB to the SMF. The SMF may verify that the WTRU's UP security policy received from the target ng-eNB/gNB is the same as the WTRU's UP security policy that the SMF has locally stored. If there is a mismatch, the SMF may send its locally stored WTRU's UP security policy of the corresponding PDU sessions to the target ng-eNB/gNB. This UP security policy information, if included by the SMF, may be delivered to the target ng-eNB/gNB in a Path-Switch Acknowledge message. The SMF may support logging capabilities for this event and may take additional measures, such as raising an alarm.

If the target ng-eNB/gNB receives WTRU's UP security policy from the SMF in a Path-Switch Acknowledge message, the target ng-eNB/gNB may update the WTRU's UP security policy with the received WTRU's UP security policy. If WTRU's current UP confidentiality and/or UP integrity protection activation is different from the received WTRU's UP security policy, then the target ng-eNB/gNB may initiate intra-cell handover procedure which includes RRC connection reconfiguration procedure to reconfigure the DRBs to activate or de-activate the UP integrity protection/confidentiality as per the received policy from SMF.

In case of the target ng-eNB/gNB receives both WTRU security capability and UP security policy, then ng-eNB/gNB may initiate the intra-cell handover procedure which contains selected algorithm and an NCC to the WTRU. New UP keys shall be derived and used at both the WTRU and the target ng-eNB/gNB.

At an N2-handover, the SMF may send the WTRU's UP security policy to the target ng-eNB/gNB via the target AMF. The target ng-eNB/gNB may reject all PDU sessions for which it cannot comply with the corresponding received UP security policy and indicate the reject-cause to the SMF via the target AMF. For all other PDU sessions, the target ng-eNB/gNB may activate UP confidentiality and/or UP integrity protection per DRB according to the received WTRU's UP security policy. If (e.g., only if) the WTRU indicates that it supports use of integrity protection with ng-eNB/gNB, the target ng-eNB/gNB may activate UP integrity protection.

At interworking-handover from an evolved packet system (EPS) (e.g., 4G system) to 5GS, the SMF+packet gateway (PGW)-C may provide the WTRU's UP security policy to the target ng-eNB/gNB via the target AMF. The target ng-eNB may determine from the UP security policy received from the AMF together with the WTRU indication that it may support user plane integrity protection with ng-eNB/gNB in WTRU EPS security capabilities (i.e. bit EIA7), whether to activate user plane integrity protection with the WTRU or not. The target ng-eNB/gNB may reject all DRBs for which it cannot comply with the corresponding UP integrity protection policy in the UP security policy and indicate the reject-cause to the source MME via the target AMF. For all other DRBs, the target ng-eNB/gNB may activate UP integrity protection per DRB according to the used UP security policy. If (e.g., only if) the WTRU indicates that it supports use of user plane integrity protection with ng-eNB/gNB, the target ng-eNB/gNB may activate UP integrity protection. If the target AMF detects in a registration procedure following interworking-handover from EPS to 5GS, and becomes aware of that there is a mismatch between the WTRU EPS security capabilities received from the source MME and the one received from the WTRU, and that the target ng-eNB may not have the WTRU capability indicating UP IP support in UE EPS security capabilities, then the AMF may send an N2 CONTEXT MODIFICATION REQUEST message to inform the target ng-eNB about the correct WTRU EPS security capabilities. Target ng-eNB/gNB may take the new WTRU EPS security capabilities into account.

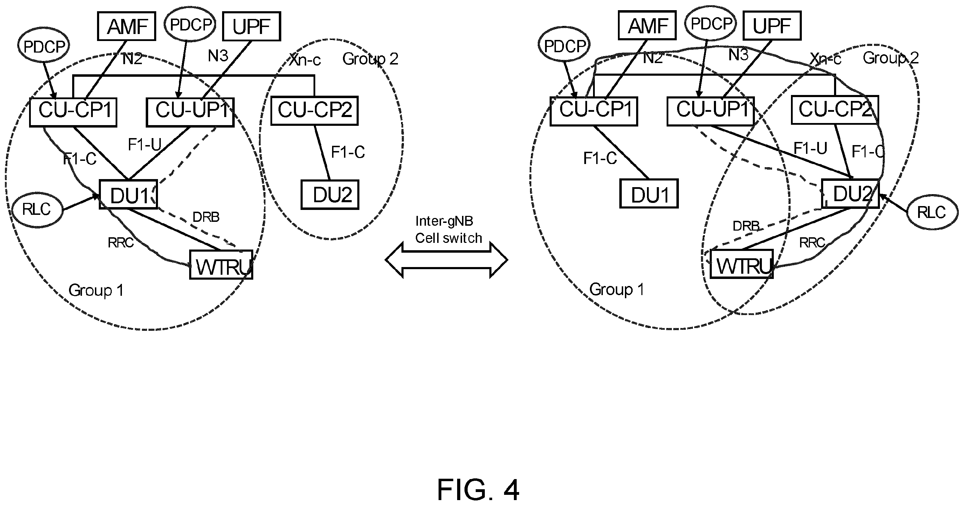

Referring to Fig. 4, an example of an inter-gNB LTM scenario is shown, where the WTRU executes an inter-gNB cell switch, where the WTRU flips its RLC connection between the cell group 1 and the cell group 2 with every inter-gNB cell switch, but the WTRU's packet data convergence protocol (PDCP) connection (e.g., always) terminates at a fixed LTM candidate gNB (namely, gNB-CU1) for control plane (CP) and UP independent of the WTRU's serving location. Consequently, the WTRU's RRC connection and WTRU's DRBs always connect to the same LTM candidate gNB.

This may have several benefits: (1) security update may be required for an inter-gNB LTM cell switch since the WTRU is RRC-connected to the same gNB; (2) PDCP entities may not need to be re-established since PDCP is not relocated. This may minimize UP interruption by avoiding PDU discard; (3) RRC signaling towards the WTRU may be not required following an inter-gNB cell switch but is required only once during LTM preparation; (4) CN may not need to be upgraded to support new security schemes and signalling; (5) dynamic signalling between RAN and CN may be not needed since path switch is not needed as long as PDCP termination point does not change; (6) minimal specification effort may be envisioned; (7) by reducing the specification changes, implementation effort may be also minimized; (8) the merits of LTM over L3 mobility may be retained similar to intra-gNB LTM mobility scenario.

Referring to Fig. 4, If PDCP and radio link control (RLC) reside in separate gNBs (source gNB and LTM candidate gNB) during inter-gNB LTM, RRC/DRBs may remain connected to the source gNB following an inter-gNB cell switch. This may have the benefits listed above. It should be noted that supporting the scenario that PDCP and RLC reside in separate gNBs may still abide by the legacy 5G RAN architecture principles where a gNB-distributed unit (gNB-DU) DU is managed by a single gNB-CU-CP.

Assuming PDCP and RLC reside in separate gNBs for LTM does not violate the legacy 5G RAN architecture principle which assumes that a gNB-DU is managed by a single gNB-CU-CP via F1-C.

While some of the benefits listed above may (e.g., only) apply to the case that CU-UP is not relocated (and thus PDCP does not have to be re-established), support of CU-UP relocation may be not precluded, where in this case, (e.g., only) a subset of the benefits would apply. However, a shared CU-UP among neighboring gNBs may be a (e.g., very) common deployment scenario so most of the times all benefits of the LTM scheme of Fig. 4 would still be retained.

Assuming PDCP and RLC reside in separate gNBs does not preclude the scenario where CU-UP is relocated (e.g., within the PDCP-terminating gNB, in which case only a subset of LTM benefits would apply).

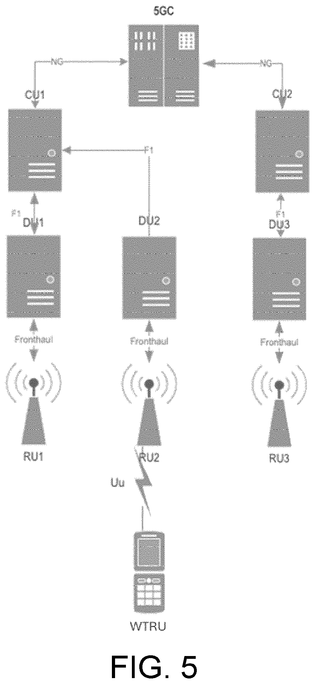

Referring to Fig. 5, an example of an intra-CU mobility and an inter-CU mobility is depicted. Access stratum (AS) security may be enforced at CU and security keys may be derived per CU and the same security keys won't be used by different CUs.

When WTRU moves from RU1 coverage to RU2 coverage, the serving DU may be changed from DU1 to DU2 but both DU1 and DU2 are connected to the same serving CU, CU1. In this case, the serving CU is unchanged but (e.g., only) serving DU is changed.

Referring to Fig. 5, when the WTRU moves from RU2 coverage to RU3 coverage, the serving DU would be changed from DU2 to DU3 and the serving CU would be also changed from CU1 to CU2. In this case, security keys may be newly derived upon inter-CU LTM from CU1 to CU2 and so the network needs to command WTRU to derive new security keys upon the mobility.

For the LTM case, WTRU may perform necessary actions for the mobility based on the LTM candidate configuration and the above mentioned security key derivation needs to be triggered by the LTM candidate configuration. In other words, WTRU may need to identify the serving CU change based on the LTM candidate configuration. However, the existing RRC signalling doesn't support the distinction between inter-CU and intra-CU LTM.

In addition, a radio bearer's anchoring point may be different e.g., based on service requirement (e.g., reliability sensitive service requires security key change-less operation while the other services can accept some data interruption due to the security key update upon inter-CU LTM). It means that a WTRU may need to identify that the newly derived key(s) may be not applied for specific radio bearer(s) while the newly derived key(s) may be applied for the other radio bearer(s) based on the LTM candidate configuration. However, the existing RRC signalling may not support the distinction between the security key update required radio bearer(s) and the security key update not-required radio bearer(s).

Furthermore, 3GPP system may expect WTRU and gNB apply the security policy newly provided by 5GC after the Xn-handover and in legacy, RAN is expected to initiate an intra-cell handover to apply the new security keys for all the radio bearers. But, by (e.g., simply) applying the legacy intra-cell handover procedure upon inter-CU mobility, then there may be some interruption due to PDCP re-establishment and the L2 reset (including HARQ reset and RLC re-establishment) regardless of user plane activities.

In case of the WTRU can avoid moving to a cell associated with a different CU from the one associated with the currently serving cell, then the data interruption due to a PDCP re-establishment can be avoided.

It may be needed to develop New LTM candidate configuration to support the following identifications: (1) WTRU identifying the serving CU change based on the LTM candidate configuration; and (2) WTRU identifying that the newly derived key(s) is(/are) not applied for specific radio bearer(s) while the newly derived key(s) are applied for the other radio bearer(s) based on the LTM candidate configuration.

In addition to that, the WTRU may (e.g., eventually) need to apply the newly derived security keys for all the established radio bearers. Thus, the following may need to be supported: (1) performing an intra-cell handover to apply the unused new security keys at a right time after the inter-CU LTM.

Lastly, there may be a potential solution to avoid PDCP re-establishment: (1) prioritizing intra-CU cells over inter-CU cells to report in an LTM measurement report by a control message (e.g., MAC CE or L1 signalling).

In an embodiment, a WTRU may derive security keys (e.g., only) when serving CU is changed and so the LTM candidate configuration may need to include an information element (IE), which may enable the WTRU to distinguish the two cases (serving CU changed case and serving CU not-changed case). There may be at least two potential solutions; (1) upper layer control message (e.g. RRC) based and (2) lower layer control message (e.g. MAC CE) based solutions as described below.

The upper layer control message (e.g., RRC) based solution may be an introduction of a new IE in the IE "RBConfig" in the LTM candidate configuration and also in the current serving cell configuration. The new IE may signal an identifier (ID) (say security derivation ID) associated with the target CU for the case of the LTM candidate configuration and an ID associated with the current serving CU for the case of the current serving cell configuration.

In case of the value of the new IE (security derivation ID) for the target CU and the value of the new IE for the source CU are different, then the WTRU may determine to derive security keys upon the LTM. Or, in case of the values are identical, then the WTRU may determine to maintain the existing security keys.

The lower layer control message (e.g. MAC CE) based solution would be lower layer control message signalling with at least "NCC" (Next Hop Chaining Count), which may tell NCC value so that WTRU may determine whether vertical key derivation or horizontal key derivation needs to be performed for the re-keying.

In another embodiment, a WTRU may perform PDCP re-establishment on radio bearer(s), which change the PDCP location. The LTM candidate configuration may need to include a new IE, which enables the WTRU to identify which radio bearer(s) need to be re-established to apply the security key(s) newly derived due to an inter-CU LTM. One potential solution is an introduction of a new ID (e.g. PDCP anchor ID) as a part of radio bearer configuration in the LTM candidate configuration and in the current serving CU's radio bearer configuration. If the new ID in the LTM candidate configuration and the one for the current serving CU are different, then the UE applies the newly derived security key(s) for the corresponding radio bearer. Or if they are identical, then the UE maintains the same security keys for the corresponding radio bearer.

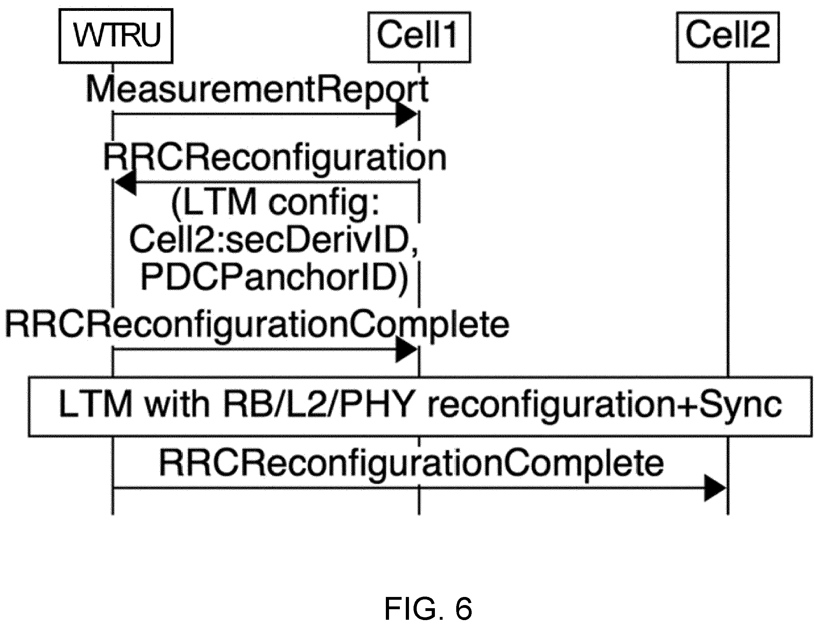

Referring to Fig. 6, in an embodiment, at a first step, the WTRU may transmit to Cell 1, a RRC message. The RRC message may be a MeasurementReport message indicating that Cell 2 fulfills reporting criteria. At a second step, the WTRU may receive from Cell 1, a configuration of one or more LTM candidate cells including Cell2's the LTM candidate configuration including a security derivation ID for Cell2 and a PDCP anchor ID which indicates the PDCP anchoring location for each configured radio bearer. At a third step, the WTRU may transmit to Cell 1, an RRCReconfiguationComplete message to confirm a successful reception of the LTM candidate cells. At a fourth step, the WTRU may perform LTM in case of Cell 2 fulfills certain criteria, the WTRU may perform a key derivation in case of certain conditions are met and in case of the key derivation is performed.

The WTRU may repeat the following operation for each configured radio bearer: (1) compare the target LTM cell's PDCP anchor ID and the currently configured PDCP anchor ID of a corresponding radio bearer at the source cell; (2) in case of they are identical, the WTRU may maintain the same security key(s) for the radio bearer and does not re-establish the PDCP entity of the radio bearer; or (3) in case of they are different, the WTRU may re-establish the PDCP entity of the radio bearer and may apply the newly derived security key(s) for the radio bearer upon the PDCP re-establishment.

At a fifth step, the WTRU may transmit an RRCReconfigurationComplete to Cell 2 to confirm a successful completion of the LTM.

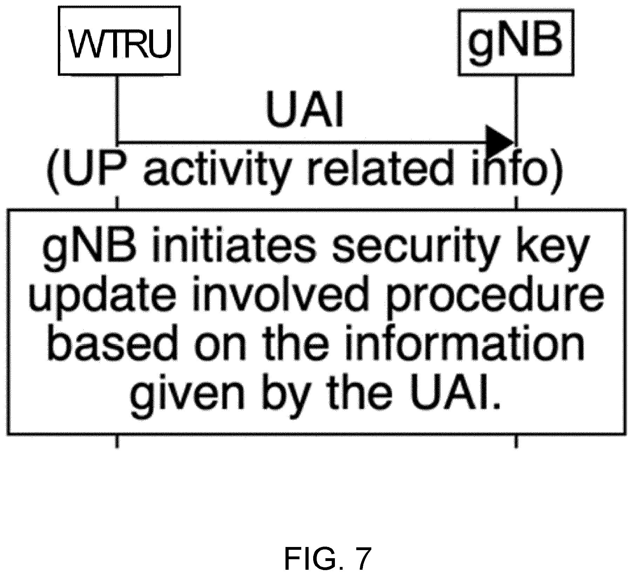

In an embodiment, it's better not to interrupt any ongoing UP activities (e.g. UAV control signalling) by the intra-cell handover procedure after the inter-CU LTM without security key update and so gNB may use the DRX pattern or, referring to Fig. 7, a WTRU may transmit an uplink control message (e.g., user equipment assistance information (UAI)) including the user plane activity related information such as until when WTRU won't generate any uplink data, until when WTRU keeps generating uplink data and/or any traffic pattern information so that the network can identity a right timing exactly when the network should initiate an intra-cell handover.

This solution may be used for the gNB to determine exactly when the inter-CU LTM (with security key update) takes place. For example, gNB may initiate the inter-CU LTM by taking into account the UP traffic pattern given by the uplink control message (e.g. UAI).

In an embodiment, a WTRU may prioritize intra-CU LTM candidate cells over inter-CU LTM candidate cells based on upper layer control message (e.g. RRC) based solution (i.e. RRC-based LTM type (intra-CU or inter-CU LTM) distinction). In addition to the intra-CU/inter-CU distinction, one of the network nodes (e.g. serving CU) may provide reporting criteria, which prioritize the intra-CU cell(s) by parameters e.g., an offset, which enables evaluating the intra-CU cells with the value of the offset better than the inter-CU ones and/or a shorter TTT applicable for the intra-CU cells while a longer TTT applied for the inter-CU ones.

According to the above embodiments, in a method, the WTRU may measure the neighboring cells, the WTRU may evaluate the measured cells with given reporting criteria, the WTRU may provide uplink control message (e.g., measurement report MAC CE) with LTM candidate cells, which fulfills the reporting criteria, and the network may transmit a LTM cell switch command by a downlink control message (e.g., LTM cell switch command MAC CE) based on the measurement report.

The benefits according to the various above embodiments may be: (1) enabling PDCP data-interruption-less inter-CU LTM by skipping a PDCP re-establishment per radio bearer; and/or (2) enabling initiating security key update procedure at a right timing not so to drop any important data due to the security key update procedure.

Terms "perform LTM" or "perform LTM procedures" refers to performing any/all of the steps described in 3GPP TS38.300 subclause 9.2.3.5.2. Specifically, early synchronization in DL and/or UL to one or more of the candidate cells, performing L1 measurements and reporting on one or more of the candidate cells, switching (i.e. performing handover) between candidate cells ("Perform LTM" can mean that the WTRU may move/switch between multiple candidate cells during the procedure).

The one or more candidate cell sets may be groups of more than one RRC configuration corresponding to a handover configuration for one or more candidate SpCells and optionally SCells. This may be modelled or received as one or more complete RRC reconfiguration messages, one or more cell group configurations, or one or more cell configurations. Each of the candidate cell configurations may include a candidate configuration identifier, and each of the candidate cell groups may include a candidate cell group identifier. If the grouping is performed at RRC, the switching between different sets of candidate cells may include updating the serving cell indexes or candidate configuration indexes which are used in L1 and MAC signalling to refer to specific indexes (for example a MAC CE triggering the reconfiguration may include a candidate configuration index informing a WTRU which cell to perform the reconfiguration to).

The one or more candidate cell groups may be configured as a single list or group of candidate cell configurations at RRC. The grouping may occur at the early sync or LTM execution phase rather than the configuration phase - what this means is that the candidate cell set may be considered as a single group in terms of an RRC configuration list or group, while the cells selected for performing early sync, L1 measurements, and LTM execution depend on a further grouping into multiple subsets of the overall candidate cell list. In other words the grouping itself may not be modelled at RRC using candidate configuration identifiers, but the grouping is executed as part of the early sync or the LTM execution procedure.

Referring to an LTM candidate configuration, this may apply to any type of preconfigured cell information. For example, a WTRU may be configured with one or more conditional reconfigurations such as conditional handover (CHO), conditional PSCell addition (CPA) or conditional PSCell change (CPC) which are valid before and/or after a cell change, or valid in certain cells.

In 5G system, security keys may be used for encryption and integrity protection of user data and signalling data. The encryption and integrity protection at AS may be enforced at a PDCP entity per radio bearer and so security keys for encryption and integrity protection may be maintained per a PDCP entity.

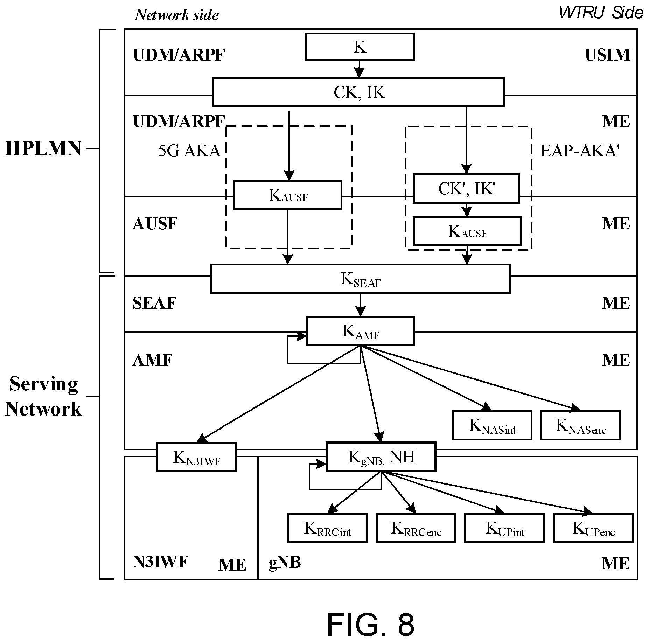

Fig. 8 is an example of a key hierarchy generation in 5G system.

Referring to Fig. 8, K_{RRCint}, K_{RRCenc}, K_{UPint} and K_{UPenc} may be used for AS security enforcement and the first two keys (i.e. K_{RRCint}, K_{RRCenc}) may be used for signalling data encryption and integrity protection and the last 2 keys (i.e. K_{UPint} and K_{UPenc}) are used for user data encryption and integrity protection. In case of the PDCP entity for a radio bearer is moved to a different gNB (e.g., different CU), then security keys for the radio bearer may be updated as the K_{gNB}, and NH may be changed upon the inter-CU mobility event.

Herein, the LTM cell switch may refer to Layer 1/Layer 2 triggered mobility whereby a preconfigured RRC configuration may be applied when the WTRU receives an indication using downlink control message (e.g. MAC CE) or when certain conditions are met at the WTRU. However, certain solutions may also apply to an RRC reconfiguration, an RRC conditional reconfiguration, as well as any other type of mobility procedure.

About LTM candidate configuration for inter-CU LTM, the gNB (e.g., a CU in case of CU/DU split architecture - note: RRC resides in CU) may configure potential LTM candidates using RRC signalling. In an embodiment a WTRU may receive a LTM candidate configurations using an RRC reconfiguration message, for example during the "LTM preparation". The WTRU may store the LTM candidate configurations to later apply upon receiving an indication using L1/2 signalling (e.g., MAC CE) to perform a cell switch, for example in the "LTM execution" phase.

In an embodiment, the configuration of potential LTM candidates may include a security anchor ID. For example, the security anchor ID may be associated with a single gNB (or a CU in case of CU/DU split architecture). The WTRU may determine whether a LTM candidate cell ends up in intra-CU LTM or inter-CU LTM by comparing the security anchor ID associated with the current serving cell and the one associated with the LTM candidate cell and by determining it's intra-CU LTM if the security anchor IDs are identical or it's inter-CU LTM if they are different. Then, the WTRU may perform the security key update upon inter-CU LTM.

In one solution, the radio bearer configuration of potential LTM candidates may include a PDCP anchor ID. For example the PDCP anchor ID may be associated with a signal gNB (or a CU), where PDCP entity is located. The WTRU may determine whether new security key(s) may be applied for the corresponding radio bearer or not base on the PDCP anchor ID. In case of the PDCP anchor ID's value of the LTM candidate cell is different from the one of the current serving cell, the WTRU may apply the new security key(s) for the corresponding radio bearer upon inter-CU LTM. Otherwise, the WTRU may maintain the same key(s) for the radio bearer upon inter-CU LTM.

In one solution, a downlink control message (e.g. MAC CE) may indicate which radio bearer does not require the security key update (and which radio bearer requires the security key update implicitly by not indicated by the indicator(s)). The control message may be the same control message as the one triggering an LTM procedure (e.g., LTM cell switch command MAC CE).

About uplink assistance information for minimizing data interruption, as mentioned above, security key update procedure may impose some data interruption due to PDCP/RLC re-establishment and L2 reset and so it may be better to perform the security key update procedure only when timing sensitive data transfer is not ongoing. To achieve that, a WTRU may transmit an uplink control message (e.g., UAI) including user traffic pattern related information such as when WTRU stops ongoing data transfer, until when WTRU continues data transfer and/or how often/how much data WTRU generates uplink data. The network (e.g., gNB) may determine exactly when the network initiates a mobility procedure, which invokes security key change so that the network may minimize the data transfer interruption imposed by the security key change procedure. The mobility procedure may be any handover procedure or any LTM procedure, which trigger security key update (i.e. inter-gNB (inter-CU) handover or inter-gNB (inter-CU) LTM).

About downlink control message for intra-cell handover, in an embodiment, a WTRU may receive a downlink control message (e.g., MAC CE), which triggers an intra-cell handover so that WTRU (and gNB) may apply the security keys for the radio bearers. In legacy, gNB may transmit an RRC reconfiguration message with radio bearer configuration indicating IE "reestablishPDCP" to force the corresponding radio bearer's PDCP to be re-established and IE "reestablishRLC" to force the corresponding radio bearer's RLC to be re-established, and so the amount of control message is not small and it may take some time to complete the intra-cell handover procedure. On the other hand, this embodiment may enable the WTRU and gNB (CU) to invoke an intra-cell handover by a single downlink control message (e.g. MAC CE) and so the handover procedure can be done more quickly. The downlink control message may include absolute necessary information only such as indication of intra-cell handover and a security related parameter e.g., NCC and potentially radio bearer ID(s)/logical channel ID(s) to signal which radio bearer/logical channel needs to be re-established/reset.

In an embodiment, the WTRU may be configured with LTM configuration to perform LTM with and without PDCP re-establishment. The LTM candidate configuration may include two new parameters: one is a security anchor ID and the other is a PDCP anchor ID.

The security anchor ID may be indicated per LTM candidate cell. The WTRU may determine whether security key derivation needs to be done upon LTM procedure from the current serving cell to the LTM candidate cell based on the security anchor ID. In case of the LTM candidate cell's security anchor ID is different from the one associated with the current serving cell, then the security key derivation may be triggered. Otherwise (e.g., they are identical), the security key derivation is not triggered.

The PDCP anchor ID may be indicated per radio bearer in a LTM candidate cell. The WTRY may determine whether a security key update needs to be done for the corresponding radio bearer or not based on the PDCP anchor ID. In case of the LTM candidate cell's PDCP anchor ID value for a radio bearer is different from the one associated with the current serving cell for the radio bearer, the WTRU may update the security key(s) for the radio bearer upon the LTM from the current serving cell to the LTM candidate cell. Otherwise (e.g., they are identical), the WTRU may maintain the same security key(s) for the radio bearer.

Below is a non-limited example of a RRC signalling for a security anchor ID:

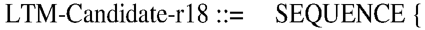

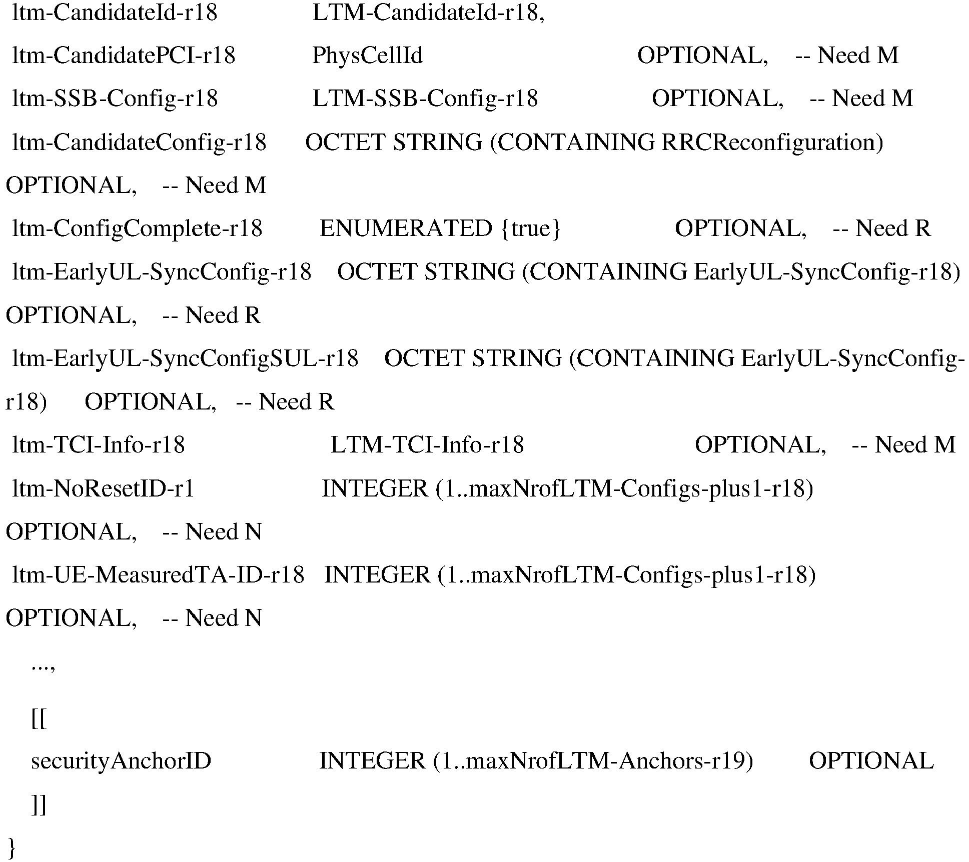

The IE "securityAnchorID" may be defined as an integer variable and the value range may be anything. As a non-limited example, the value range may be defined between 1 and maxNrofLTM-Anchors-r19, which is separately defined constant and the constant can be defined with any number e.g. 8, 256. The IE may be added in the IE "CellGroupConfig" so that gNB can indicate the ID for the current serving cell when the serving cell was configured first time (e.g. upon RRC connection setup, upon handover or upon RRC state transition from RRC_INACTIVE to RRC_CONNECTED).

Below is a non-limited example of a RRC signalling for the PDCP anchor ID.

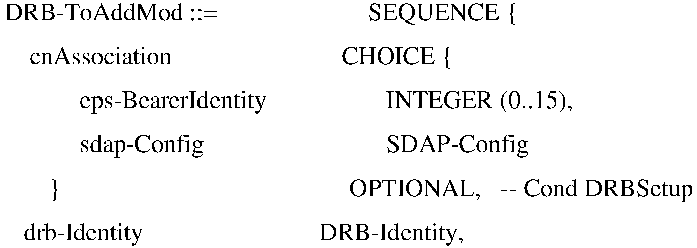

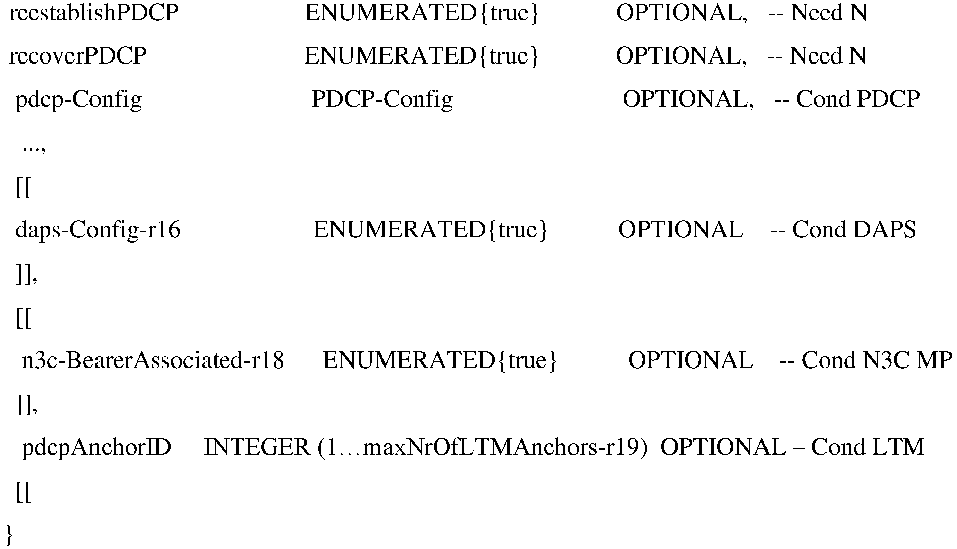

The IE "pdcpAnchorID" may be defined as an integer variable and the value range can be anything. As non-limited example, the IE "pdcpAnchorID" may defined with a value range between '1' and a separately defined constant maxNrOfLTMAnchors-r19, which can be defined with any number e.g. 8, 32 or 256. The IE may be present in the IE "DRB-ToAddMod" as an optional parameter and the IE should be present only if the IE "DRB-ToAddMod" is included as part of the LTM candidate configuration (i.e. IE "LTM-Candidate-rl8"). A condition "LTM" may be added after the IE "pdcpAnchor-ID" definition. The condition of "LTM" is described in a conditional presence explanation RRC ASN.1 definition.

The same change may be applied for IE "SRB-ToAddMod" if the inter-CU LTM without security key update can be applied for not only DRB but also for SRB.

In an embodiment, at a first step, a WTRU may Receive a configuration of one or more LTM candidate cells including a securityAnchorID and pdcpAnchorID(s).

At a second step, the WTRU may perform steps of Fig. 2 up to the block 'Early Sync"

At a third step, the WTRU may receive a LTM cell switch command (during the LTM execution phase, see Fig. 2)

At a fourth step, the WTRU may evaluate the securityAnchorID. It may evaluate the securityAnchorID by comparing the source cell's and the target cell's securityAnchorID values. If they are different, the WTRU may perform security key derivation.

At a fifth step, in case of the WTRU performs the security key derivation at the fourth step above, the WTRU may evaluate the pdcpAnchorID for each established radio bearer (either DRB only or Signaling Radio Bearer (SRB)+DRB). The WTRU may evaluate the pdcpAnchorID by comparing the source cell's and the target cell's pdcpAnchorID for each established radio bearer. If they are different, the WTRU may perform a PDCP re-establishment for the corresponding radio bearer to apply the newly derived key(s) (generated at the fourth step above) for the radio bearer.

At a sixth step, the WTRU may perform the remaining steps after detaching from the source cell in Fig. 2.

The above embodiment may provide at least the following benefit: It may enable inter-CU LTM without security key update for specific radio bearer(s). This may be beneficial for delay sensitive services such as factory automation control signalling, drone control signalling and any other mission critical services as the service won't have large data interruption even when inter-CU LTM is performed.

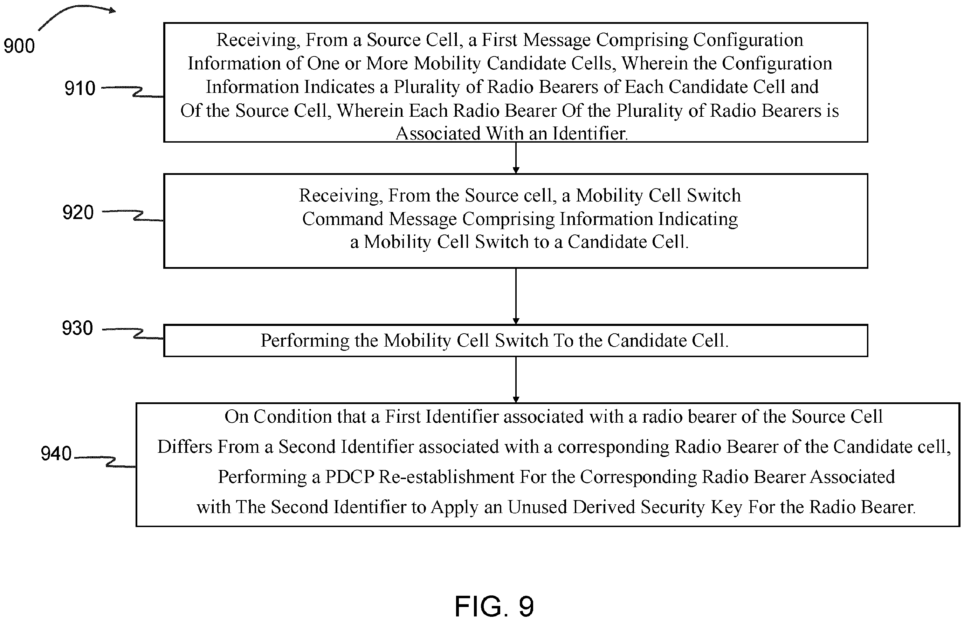

Referring to FIG. 9, a method 900, implemented in a WTRU, for a LTM operation, may comprise a first step wherein the WTRU may receive 910, from a source cell, a first message comprising configuration information of one or more candidate cells, wherein the configuration information indicates a plurality of radio bearers of each candidate cell and of the source cell, wherein each radio bearer of the plurality of radio bearers is associated with an identifier. The method 900 may further comprise a step wherein the WTU may receive 920, from the source cell, a mobility cell switch command message comprising information indicating a mobility cell switch to a candidate cell. The method 900, may comprise a step wherein the WTRU may perform 930 the mobility cell switch to the candidate cell; and a step wherein the WTRU may perform 940 a packet data convergence protocol, PDCP, re-establishment for the corresponding radio bearer associated with the second identifier to apply an unused derived security key for the radio bearer, on condition that a first identifier associated with a radio bearer of the source cell differs from a second identifier associated with a corresponding radio bearer of the candidate cell.

The unused derived security key may be a new security key derived during performing the mobility cell switch to the candidate cell. The unused derived security key may be derived during a previously performed mobility procedure and not yet applied to the corresponding radio bearer.

The method 900, may comprise a step wherein the WTRU may maintain a current security key for the radio bearer, on condition that the first identifier associated with a radio bearer of the source cell is identical to the second identifier associated with a corresponding radio bearer of the candidate cell.

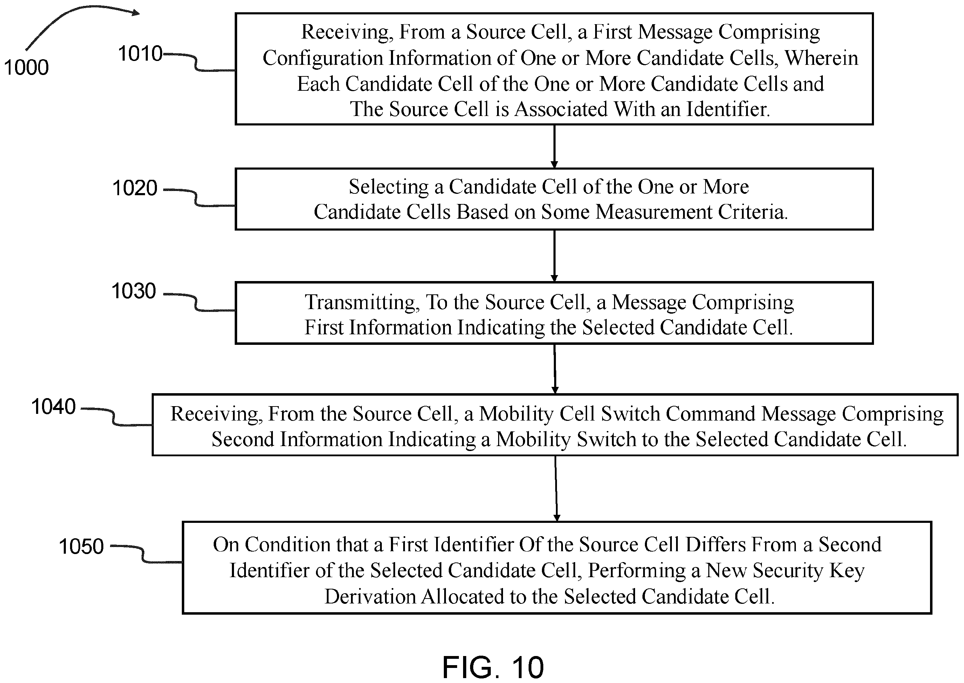

Referring to FIG. 10, a method 1000, implemented in a WTRU, for a LTM operation, may comprise a first step wherein the WTRU may receive 1010, from a source cell, a first message comprising configuration information of one or more candidate cells, wherein each candidate cell of the one or more candidate cells and the source cell is associated with an identifier. The method 1000 may comprise a step wherein the WTRU may select 1020 a candidate cell of the one or more mobility candidate cells based on some measurement criteria. The method 1000 may further comprise a step wherein the WTRU may transmit 1030, to the source cell, a message comprising first information indicating the selected candidate cell. The method 1000 may further comprise a step wherein the WTRU may receive 1040, from the source cell, a mobility cell switch command message comprising second information indicating a mobility switch to the selected candidate cell; and a step wherein the TRU may perform 1050 a new security key derivation allocated to the selected mobility candidate cell, on condition that a first identifier of the source cell differs from a second identifier of the selected candidate cell.

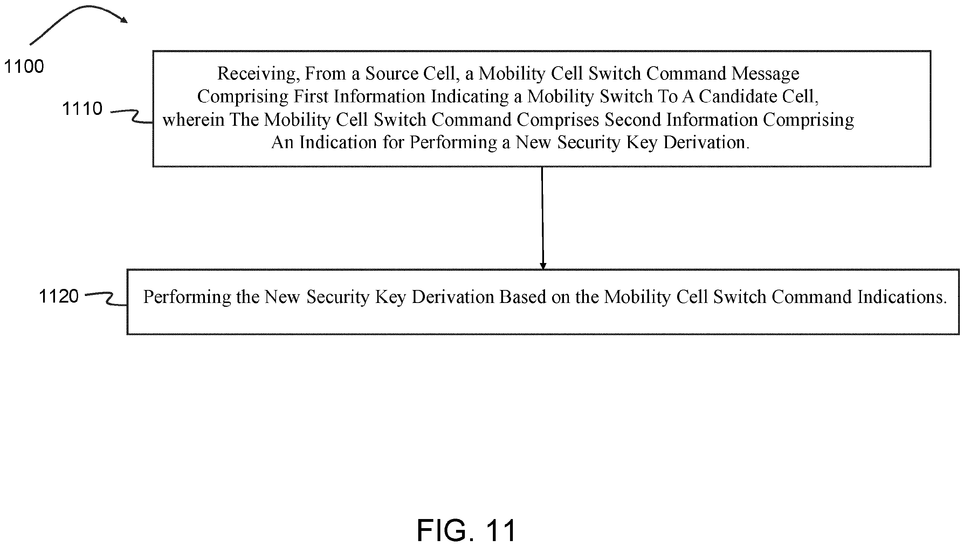

Referring to FIG. 11, a method 1100, implemented in a WTRU, for a LTM operation, may comprise a first step wherein the WTRU may receive 1110, from a source cell, a mobility cell switch command message comprising first information indicating a mobility switch to a candidate cell, wherein the mobility cell switch command comprises second information comprising an indication for performing a new security key derivation; and a step wherein the WTRU may perform 1120 the new security key derivation based on the mobility cell switch command indications.

The mobility cell switch command message may be a medium access control element, MAC CE.

The indication for performing the new security key derivation may be a next hop chaining counter, NCC.

Although features and elements are provided above in particular combinations, one of ordinary skill in the art will appreciate that each feature or element can be used alone or in any combination with the other features and elements. The present disclosure is not to be limited in terms of the particular embodiments described in this application, which are intended as illustrations of various aspects. Many modifications and variations may be made without departing from its spirit and scope, as will be apparent to those skilled in the art. No element, act, or instruction used in the description of the present application should be construed as critical or essential to the invention unless explicitly provided as such. Functionaly equivalent methods and apparatuses within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is to be understood that this disclosure is not limited to particular methods or systems.

The foregoing embodiments are discussed, for simplicity, with regard to the terminology and structure of infrared capable devices, i.e., infrared emitters and receivers. However, the embodiments discussed are not limited to these systems but may be applied to other systems that use other forms of electromagnetic waves or non-electromagnetic waves such as acoustic waves.

It is also to be understood that the terminology used herein is for the purpose of describing particular embodiments only and is not intended to be limiting. As used herein, the term "video" or the term "imagery" may mean any of a snapshot, single image and/or multiple images displayed over a time basis. As another example, when referred to herein, the terms "user equipment" and its abbreviation "UE", the term "remote" and/or the terms "head mounted display" or its abbreviation "HMD" may mean or include (i) a wireless transmit and/or receive unit (WTRU); (ii) any of a number of embodiments of a WTRU; (iii) a wireless-capable and/or wired-capable (e.g., tetherable) device configured with, inter alia, some or all structures and functionality of a WTRU; (iii) a wireless-capable and/or wired-capable device configured with less than all structures and functionality of a WTRU; or (iv) the like. Details of an example WTRU, which may be representative of any WTRU recited herein, are provided herein with respect to FIGs. 1A-1D. As another example, various disclosed embodiments herein *supra* and *infra* are described as utilizing a head mounted display. Those skilled in the art will recognize that a device other than the head mounted display may be utilized and some or all of the disclosure and various disclosed embodiments can be modified accordingly without undue experimentation. Examples of such other device may include a drone or other device configured to stream information for providing the adapted reality experience.

In addition, the methods provided herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

Variations of the method, apparatus and system provided above are possible without departing from the scope of the invention. In view of the wide variety of embodiments that can be applied, it should be understood that the illustrated embodiments are examples only, and should not be taken as limiting the scope of the following claims. For instance, the embodiments provided herein include handheld devices, which may include or be utilized with any appropriate voltage source, such as a battery and the like, providing any appropriate voltage.

Moreover, in the embodiments provided above, processing platforms, computing systems, controllers, and other devices that include processors are noted. These devices may include at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits. It should be understood that the embodiments are not limited to the above-mentioned platforms or CPUs and that other platforms and CPUs may support the provided methods.

The data bits may also be maintained on a computer readable medium including magnetic disks, optical disks, and any other volatile (e.g., Random Access Memory (RAM)) or non-volatile (e.g., Read-Only Memory (ROM)) mass storage system readable by the CPU. The computer readable medium may include cooperating or interconnected computer readable medium, which exist exclusively on the processing system or are distributed among multiple interconnected processing systems that may be local or remote to the processing system. It should be understood that the embodiments are not limited to the above-mentioned memories and that other platforms and memories may support the provided methods.

In an illustrative embodiment, any of the operations, processes, etc. described herein may be implemented as computer-readable instructions stored on a computer-readable medium. The computer-readable instructions may be executed by a processor of a mobile unit, a network element, and/or any other computing device.

There is little distinction left between hardware and software implementations of aspects of systems. The use of hardware or software is generally (but not always, in that in certain contexts the choice between hardware and software may become significant) a design choice representing cost versus efficiency tradeoffs. There may be various vehicles by which processes and/or systems and/or other technologies described herein may be effected (e.g., hardware, software, and/or firmware), and the preferred vehicle may vary with the context in which the processes and/or systems and/or other technologies are deployed. For example, if an implementer determines that speed and accuracy are paramount, the implementer may opt for a mainly hardware and/or firmware vehicle. If flexibility is paramount, the implementer may opt for a mainly software implementation. Alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples include one or more functions and/or operations, it will be understood by those within the art that each function and/or operation within such block diagrams, flowcharts, or examples may be implemented, individually and/or collectively, by a wide range of hardware, software, firmware, or virtually any combination thereof. In an embodiment, several portions of the subject matter described herein may be implemented via Application Specific Integrated Circuits (ASICs), Field Programmable Gate Arrays (FPGAs), digital signal processors (DSPs), and/or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein may be distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a CD, a DVD, a digital tape, a computer memory, etc., and a transmission type medium such as a digital and/or an analog communication medium (e.g., a fiber optic cable, a waveguide, a wired communications link, a wireless communication link, etc.).

Those skilled in the art will recognize that it is common within the art to describe devices and/or processes in the fashion set forth herein, and thereafter use engineering practices to integrate such described devices and/or processes into data processing systems. That is, at least a portion of the devices and/or processes described herein may be integrated into a data processing system via a reasonable amount of experimentation. Those having skill in the art will recognize that a typical data processing system may generally include one or more of a system unit housing, a video display device, a memory such as volatile and non-volatile memory, processors such as microprocessors and digital signal processors, computational entities such as operating systems, drivers, graphical user interfaces, and applications programs, one or more interaction devices, such as a touch pad or screen, and/or control systems including feedback loops and control motors (e.g., feedback for sensing position and/or velocity, control motors for moving and/or adjusting components and/or quantities). A typical data processing system may be implemented utilizing any suitable commercially available components, such as those typically found in data computing/communication and/or network computing/communication systems.

The herein described subject matter sometimes illustrates different components included within, or connected with, different other components. It is to be understood that such depicted architectures are merely examples, and that in fact many other architectures may be implemented which achieve the same functionality. In a conceptual sense, any arrangement of components to achieve the same functionality is effectively "associated" such that the desired functionality may be achieved. Hence, any two components herein combined to achieve a particular functionality may be seen as "associated with" each other such that the desired functionality is achieved, irrespective of architectures or intermedial components. Likewise, any two components so associated may also be viewed as being "operably connected", or "operably coupled", to each other to achieve the desired functionality, and any two components capable of being so associated may also be viewed as being "operably couplable" to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, where only one item is intended, the term "single" or similar language may be used. As an aid to understanding, the following appended claims and/or the descriptions herein may include usage of the introductory phrases "at least one" and "one or more" to introduce claim recitations. However, the use of such phrases should not be construed to imply that the introduction of a claim recitation by the indefinite articles "a" or "an" limits any particular claim including such introduced claim recitation to embodiments including only one such recitation, even when the same claim includes the introductory phrases "one or more" or "at least one" and indefinite articles such as "a" or "an" (e.g., "a" and/or "an" should be interpreted to mean "at least one" or "one or more"). The same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items. Moreover, as used herein, the term "set" is intended to include any number of items, including zero. Additionally, as used herein, the term "number" is intended to include any number, including zero. And the term "multiple", as used herein, is intended to be synonymous with "a plurality".

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein may be readily broken down into a lower third, middle third and upper third, etc. As will also be understood by one skilled in the art all language such as "up to," "at least," "greater than," "less than," and the like includes the number recited and refers to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

Moreover, the claims should not be read as limited to the provided order or elements unless stated to that effect. In addition, use of the terms "means for" in any claim is intended to invoke 35 U.S.C. § 112, ¶ 6 or means-plus-function claim format, and any claim without the terms "means for" is not so intended.

## Claims

1. A method implemented in a wireless transmit/receive unit, WTRU, comprising:
receiving, from a source cell, a first message comprising configuration information of one or more candidate cells, wherein the configuration information indicates a plurality of radio bearers of each candidate cell and of the source cell, wherein each radio bearer of the plurality of radio bearers is associated with an identifier;
receiving, from the source cell, a mobility cell switch command message comprising information indicating a mobility cell switch to a candidate cell;
performing the mobility cell switch to the candidate cell; and
on condition that a first identifier associated with a radio bearer of the source cell differs from a second identifier associated with a corresponding radio bearer of the candidate cell, performing a packet data convergence protocol, PDCP, re-establishment for the corresponding radio bearer associated with the second identifier to apply an unused derived security key for the radio bearer.

2. The method of claim 1, wherein the unused derived security key is a new security key derived during performing the mobility cell switch to the candidate cell.

3. The method of claim 1, wherein the unused derived security key is derived during a previously performed mobility procedure and not yet applied to the corresponding radio bearer.

4. The method of any of claims 1 to 3, comprising maintaining a current security key for the radio bearer, on condition that the first identifier associated with a radio bearer of the source cell is identical to the second identifier associated with a corresponding radio bearer of the candidate cell.

5. A method, implemented in a wireless transmit/receive unit, WTRU, comprising
receiving, from a source cell, a first message comprising configuration information of one or more candidate cells, wherein each candidate cell of the one or more candidate cells and the source cell is associated with an identifier;
selecting a candidate cell of the one or more candidate cells based on some measurement criteria;
transmitting, to the source cell, a message comprising first information indicating the selected candidate cell;
receiving, from the source cell, a mobility cell switch command message comprising second information indicating a mobility switch to the selected candidate cell; and
on condition that a first identifier of the source cell differs from a second identifier of the candidate cell, performing a new security key derivation allocated to the selected candidate cell.

6. A method, implemented in a WTRU, the method comprising:
receiving, from a source cell, a mobility cell switch command message comprising first information indicating a mobility switch to a candidate cell, wherein the mobility cell switch command comprises second information comprising an indication for performing a new security key derivation; and
performing the new security key derivation based on the mobility cell switch command indications.

7. The method of claim 6, wherein the mobility cell switch command message is a medium access control element, MAC CE.

8. The method of claim any of the claims 6 and 7, wherein the indication for performing the new security key derivation is a next hop chaining counter, NCC.

9. A wireless transmit/receive unit, WTRU, comprising a processor, a transmitter, a receiver and a memory, configured to:
receive, from a source cell, a first message comprising configuration information of one or more candidate cells, wherein the configuration information indicates a plurality of radio bearers of each candidate cell and of the source cell, wherein each radio bearer of the plurality of radio bearers is associated with an identifier;
receive, from the source cell, a mobility cell switch command message comprising information indicating a mobility cell switch to a candidate cell;
perform the mobility cell switch to the candidate cell; and
perform a packet data convergence protocol, PDCP, re-establishment for the corresponding radio bearer associated with the second identifier to apply an unused derived security key for the radio bearer, on condition that a first identifier associated with a radio bearer of the source cell differs from a second identifier associated with a corresponding radio bearer of the candidate cell.

10. The WTRU of claim 9, wherein the unused derived security key is a new security key derived during performing the mobility cell switch to the candidate cell.

11. The WTRU of claim 9, wherein the unused derived security key is derived during a previously performed mobility procedure and not yet applied to the corresponding radio bearer.

12. The WTRU of any of claims 9 to 11, configured to maintain a current security key for the radio bearer, on condition that the first identifier associated with a radio bearer of the source cell is identical to the second identifier associated with a corresponding radio bearer of the candidate cell.

13. A wireless transmit/receive unit, WTRU, comprising a processor, a transmitter, a receiver and a memory, configured to:
receive, from a source cell, a mobility cell switch command message comprising first information indicating a mobility switch to a candidate cell, wherein the mobility cell switch command comprises second information comprising an indication for performing a new security key derivation; and
perform the new security key derivation based on the mobility cell switch command indications.

14. The WTRU of claim 13, wherein the mobility cell switch command message is a MAC CE.

15. The WTRU of any of the claims 13 and 14, wherein the indication for performing the new security key derivation is a next hop chaining counter, NCC.
